# EUROPÄISCHE PATENTANMELDUNG

(11) **EP 3 944 035 A1**
(43) Veröffentlichungstag der Anmeldung: **26.01.2022**
(21) Anmeldenummer: 21183009.6
(22) Anmeldetag: 01.07.2021
(51) Int. Cl.: G05B 19/042

(54) **VERFAHREN ZUM AUSLESEN VON GERÄTEPARAMETERN EINES FELDGERÄTES SOWIE EIN ENTSPRECHENDES FELDGERÄT**

(30) Priorität: 22.07.2020 DE 102020119359
(71) Anmelder: Turck Holding GmbH, 58553 Halver (DE)
(72) Erfinder: Schwagmann, Hermann, 32760 Detmold (DE); Kriegel, Thomas, 58515 Lüdenscheid (DE)
(74) Vertreter: DTS Patent- und Rechtsanwälte Schnekenbühl und Partner mbB

(57) **Zusammenfassung**

Die vorliegende Erfindung betrifft ein Feldgerät mit einer Microcontroller-basierten elektronischen Schaltung, umfassend ein mit dem Microcontroller verbundenen Speicherbausstein, der eingerichtet ist, um während des Betriebs des Feldgeräts Daten zu speichern, wobei eine drahtlose Schnittstelle vorgesehen ist, über die die Daten aus dem Speicherbaustein auslesbar sind sowie ein Verfahren zum Auslesen von Geräteparametern eines Feldgerätes.

## Beschreibung

Die vorliegende Erfindung betrifft ein Verfahren zum Auslesen von Geräteparametern eines Feldgerätes sowie ein entsprechendes Feldgerät.

In Feldgeräten gespeicherte Daten zur Konfiguration werden bei einem Ersatz eines Feldgerätes vorteilhafterweise für das neue Gerät übernommen. In der DE102011089346A1 wird hierzu ein Verfahren zum Betreiben eines Feldgerätes der Prozessautomatisierungstechnik beschrieben, um die Grundfunktion des Feldgerätes zur Verfügung zu stellen, selbst wenn die Energieversorgung des Feldgerätes bspw. über den Feldbus ausgefallen sein sollte.

Bei einem Totalausfall des Feldgerätes kann es hingegen zeitaufwendig sein, im nachhinein den Fehler zu suchen, der zum Ausfall des Feldgeräts geführt hat. Dies können Umwelteinflüsse (Vibration, Feuer, Druck, etc.) oder auch Bedienfehler (Unterbrechung eines Updates) gewesen sein.

Microcontroller-basierte elektronische Schaltungen, wie sie in Feldgeräten wie eine Feldbusstation mit Kommunikationsschnittstellen und Ein-/Ausgängen oder einer Sensoreinheitoder Infrastrukturkomponenten wie Switche eingesetzt werden, sind vielen schädigenden Umweltbedingungen ausgesetzt und/oder können durch eine Falschbedienung zerstört werden. Diese elektronischen Schaltungen sind durch geeignete Maßnahmen gegen derartige Umwelt- und Verwendungsbedingungen geschützt. Dazu gehören mechanische und konstruktive Lösungen wie Gehäuse, Dichtungen, Verguss, Lackierungen und Kunstoffkapselungen, die diese Schaltungen umgeben und gegen mechanische Einflüße (Schock, Vibration) schützen und Eindringen von Wasser oder anderen schädlichen Materialien verhindern. Weiter werden technische Lösungen eingesetzt, die beispielsweise zerstörerische Spannungsspitzen, Überlastungen, Überhitzungen, falsche Benutzung oder Verwendung in bestimmten Grenzen verhindern können. Alle Belastungen, die darüber hinaus auftreten können, zerstören die elektronische Schaltung oder ihre Bauteile kurz- oder langfristig. Diese werden im Normalfall für den Verwender des Geräts anhand von Bedienungsanleitungen und Normeninformationen bekannt gemacht, um sicher zu stellen, dass diese elektronischen Schaltungen nicht ausserhalb der genannten Belastungsgrenzen verwendet werden oder eine andersweitige Falschverwendung zur Zerstörung führt. Eine falsche Verwendung könnte beispielsweise eine zu hohe Umgebungstemperatur, Betrieb unter Wasser, eine zu hohe Strom- oder Spannungsbelastung oder Vibrationsbelastung sein. Eine weitere Fehlerquelle ist eine Unterbrechung der Energieversorgung während kritischer Betriebszustände eines Gerätes, das gerade beispielsweise ein Software-Update erfährt.

Trotz aller Schutzmaßnahmen und Hinweise und Einschränkungen der Bedienung tritt die Zerstörung elektronischer Schaltungen und Geräte auf. Nach der Zerstörung dieser Schaltungen oder Geräte sind sie im Zweifel nicht mehr betriebsbereit.

Aufgabe der vorliegenden Erfindung war es daher, ein Feldgerät bereitzustellen, bei dem eine Fehlersuche bei Totalausfall einfacher möglich ist bzw. ein Verfahren zum Auslesen von Geräteparametern oder Betriebsdaten oder Betriebszuständen eines erfindungsgemäßen Feldgerätes bereitzustellen, das bei Totalausfall des Feldgeräts ausgeführt werden kann.

Diese Aufgabe wird erfindungsgemäß gelöst durch ein Feldgerät mit den Merkmalen des unabhängigen Produktanspruchs sowie durch ein Verfahren mit den Merkmalen des Verfahrensanspruchs. Vorteilhafte Ausgestaltungen sind in den Unteransprüchen angegeben.

Danach wird die Aufgabe gelöst durch ein Feldgerät mit einer Microcontroller-basierten elektronischen Schaltung, umfassend ein mit dem Microcontroller verbundenen Speicherbausstein, der eingerichtet ist, um während des Betriebs des Feldgeräts Daten zu speichern, wobei eine drahtlose Schnittstelle vorgesehen ist, über die die Daten aus dem Speicherbaustein auslesbar sind.

Ein Feldgerät ist bevorzugt eine Feldbusstation mit Kommunikationsschnittstellen und Ein-/Ausgängen oder einer Sensoreinheit oder Infrastrukturkomponenten wie Switche.

Als Mikrocontroller (auch µController, µC, MCU) werden vor allem Halbleiterchips bezeichnet, die einen Prozessor und zugleich auch Peripheriefunktionen enthalten. In vielen Fällen befindet sich auch der Arbeits- und Programmspeicher teilweise oder komplett auf demselben Chip. Ein Mikrocontroller ist ein Ein-Chip-Computersystem. Für manche Mikrocontroller wird auch der Begriff System-on-a-Chip oder SoC verwendet. Bevorzugt finden sich auf Mikrocontrollern auch komplexe Peripheriefunktionen wie z. B. CAN- (Controller Area Network), LIN-(Local Interconnect Network), USB- (Universal Serial Bus), I2C- (Inter-Integrated Circuit), SPI- (Serial Peripheral Interface), serielle oder Ethernet-Schnittstellen, PWM-Ausgänge, LCD-Controller und -Treiber sowie Analog-Digital-Umsetzer. Bevorzugt verfügen Mikrocontroller auch über programmierbare digitale und/oder analoge bzw. hybride Funktionsblöcke.

Der Speicherbausstein ist bevorzugt ein gesonderter Speicherbaustein, der vom Mikrocontroller getrennt ausgeführt ist und mit dem Mikrocontroller lediglich verbunden ist. Es ist auch möglich, dass der Speicherbaustein mit dem Mikrocontroller zusammen aufgebaut ist und sich der Speicherbaustein auf demselben Chip wie der Mikrocontroller befindet. Der Speicherbaustein kann auch in einem Tag der drahtlosen Schnittstelle integriert sein, insbesondere in einem RFID-/NFC-Tag. Der Speicherbaustein kann eine erste Schnittstelle aufweisen, mit der er an den Mikrocontroller anschließbar ist und eine zweite Schnittstelle aufweisen, die drahtlos ist und über die er auslesbar ist und bevorzugt auch beschreibbar ist.

Der Speicherbaustein ist eingerichtet, um während des Betriebs des Feldgeräts Daten bzw. Informationen zu speichern. Diese Daten bzw. Informationen können wertvolle Applikationsinformationen beinhalten (Konfiguration des Gerätes, Rezepte, Verwendungsinformationen, etc.), aber auch anderweitige Betriebsinformationen wie die Anzahl der ermittelten Überspannungen während des Betriebes, gemessenen Umgebungswerten wie Temperatur, Feuchtigkeit, Betriebsstunden oder letzte Zustandinformationen wie "befinde mich in der Updatefunktion der Betriebssoftware" oder "Spannungsspitze dedektiert", "Umgebungstemperatur zu hoch" etc. Hierzu ist der Speicherbaustein bevorzugt mit dem Microcontroller elektrisch leitend verbunden, besonders bevorzugt ebenfalls über eine drahtlose Schnittstelle.

Die drahtlose Schnittstelle, über die die Daten aus dem Speicherbaustein auslesbar sind, ist bevorzugt als eigenes Bauteil ausgebildet und mit dem Speicher verbunden. Hierüber ist es möglich, die Daten im Speicherbaustein auch dann auszulesen, wenn der Mikrocontroller nicht mehr ansprechbar ist. Besonders bevorzugt ist die drahtlose Schnittstelle, über die die Daten aus dem Speicherbaustein auslesbar sind, integral mit dem Speicher ausgebildet.

Durch die Ergänzung einer solchen Microcontroller-basierten elektronischen Schaltung in einem Feldgerät durch ein mit dem Microcontroller verbundenen Speicherbausstein, der bevorzugt auch als passiver NFC-Tag ansprechbar ist, können die Daten, die auf dem Speicherbaustein im Betrieb gespeichert worden sind, unabhängig vom Zustand der restlichen Komponenten ausgelesen und durch Auswertung ermittelt werden, was zum (Total-)Ausfall des Feldgeräts geführt hat. Informationen, die auf diesem Speicherbausstein hinterlegt worden sind, können so "post-mortem" ausgelesen werden. Somit ist es möglich, über eine ansonsten nicht mehr betriebsbereite Schaltung (oder ein Gerät) noch beispielsweise über einen von aussen herangeführten RFID-Reader Informationen zu gewinnen.

Speicherbausteine können oftmals auch aus der zerstörten Schaltungen herausgelöst werden und in funktionierenden elektronischen Schaltungen oder Systemen eingesetzt oder angesprochen werden. Dadurch werden die wertvollen Informationen wieder verfügbar. Dies ist aber aufwendiger als das Auslesen der Daten über die drahtlose Schnittstelle, insbesondere wenn die Bausteine beispielsweise vergossen oder lackiert sind bzw. anderweitig nicht technisch leicht zugänglich sind und damit nicht zerstörungsfrei entfernt werden können - gegebenenfalls nur durch thermische Behandlung oder chemische Freisetzung. Elektronische Schaltungen und Geräte können somit trotz der nicht mehr möglichen Inbetriebnahme "post mortem" analysiert werden. Erkenntnisse darüber können als Nachweis einer Falschbehandlung dienen und Gewährleistungs- oder Schadensersatzansprüche vermeiden oder wertvolle Informationen über den Zustands des Gerätes liefern, um eine Fehlerbehebung eines Gerätetyps zu vereinfachen.

Bei einem vorteilhaften Feldgerät ist der Speicherbaustein eingerichtet, um als passiver RFID-Tag ansprechbar zu sein. Einer solchen Microcontroller-basierten elektronischen Schaltung wird damit ein mit dem Microcontroller verbundener Speicherbausstein hinzugefügt, der auch als passiver RFID-Tag ansprechbar ist. Es ist ebenfalls möglich, einen HF-RFID-Tag oder einen NFC-Tag einzusetzen. Bevorzugt wird eine Kombination von mehreren Tags genutzt, um die Redundanz zu erhöhen. Es kann sich dabei um mehrere baugleiche Tags handeln oder um mehrere Tags unterschiedlicher Bauart, d.h. RFID-Tag, HF-RFID-Tag oder NFC-Tag in Kombination bzw. Tags unterschiedlicher Speicherkapazität in Kombination. Hierdurch ist es auch möglich, unterschiedliche Inhalte auf die unterschiedlichen Speicher der einzelnen Tags zu speichern und damit über unterschiedliche Tags und deren drahtlose Schnittstellen wieder abzurufen.

Über diesen RFID-Tag können auch vor der Havarie des Gerätes Informationen über die drahtlose Schnittstelle ausgelesen werden und es ist bevorzugt auch möglich, Informationen über die drahtlose Schnittstelle auf den Speicherbaustein des Tags zu schreiben. Damit können beispielsweise Wartungs- oder Inspektionsdaten auf dem Speicherbaustein abgelegt werden oder ältere Daten auch gelöscht werden.

Bevorzugt werden Tags eingesetzt, die zur drahtlosen Schnittstelle zusätzlich eine Schnittstelle zum Microcontroller aufweisen. Der RFID-Tag mit dem Speicherbaustein ist damit der Datenträger für die geloggten Daten.

Weiterhin bevorzugt ist ein Feldgerät vorgesehen, bei dem der Speicherbaustein einen Transponder, vorzugsweise gem. dem NFC- und/oder dem RFID-Standard, aufweist.

Die Near Field Communication (dt. Nahfeldkommunikation, abgekürzt NFC) ist ein auf der RFID-Technik basierender internationaler Übertragungsstandard zum kontaktlosen Austausch von Daten per elektromagnetischer Induktion mittels loser gekoppelter Spulen über kurze Strecken von wenigen Zentimetern und einer Datenübertragungsrate von maximal 424 kBit/s.

RFID (englisch radio-frequency identification "Identifizierung mit Hilfe elektromagnetischer Wellen") bezeichnet eine Technologie für Sender-Empfänger-Systeme zum automatischen und berührungslosen Identifizieren und Lokalisieren von Objekten und Lebewesen mit Radiowellen.

Ein RFID-System besteht in der Regel aus einem Transponder (umgangssprachlich auch Funketikettgenannt), der sich am oder im Gegenstand, hier also bevorzugt dem Speicherbaustein, befindet und einen kennzeichnenden Code enthält, sowie einem Lesegerät zum Auslesen dieser Kennung.

Es besteht die Möglichkeit, RFID-Transponder über ein spezielles Druckverfahren stabiler Schaltungen aus Polymerenherzustellen.

Die Kopplung geschieht bevorzugt durch vom Lesegerät erzeugte magnetische Wechselfelder in geringer Reichweite oder durch hochfrequente Radiowellen. Damit werden bevorzugt nicht nur Daten übertragen, sondern auch der Transponder mit Energie versorgt.

Das Lesegerät enthält bevorzugt eine Software (ein Mikroprogramm), die den eigentlichen Leseprozess steuert, und besonders bevorzugt auch eine RFID-Middleware mit Schnittstellen zu weiteren EDV-Systemen und Datenbanken.

Weiterhin bevorzugt ist ein Feldgerät vorgesehen, bei dem der Speicherbaustein und/ oder der Microcontroller technisch nicht zugänglich eingebaut sind/ ist. Dadurch können die Bausteine vor Umwelteinflüssen und Beschädigungen geschützt werden.

Weiterhin bevorzugt ist ein Feldgerät vorgesehen, bei dem die Daten Stationsparameter des Gerätes oder weitere Betriebsparameter umfassen.

Hierbei umfassen Stationsparameter bevorzugt notwendige Konfigurationsdaten, z.B. Geräteparameter, aber auch Produktionsdaten.

Betriebsparameter umfassen bevorzugt alles, was der Mikrocontroller erfasst und neben den Stationsparametern zur Laufzeit in den Speicher lädt (z.B. (Betriebs-)Spannungswerte, Reset-Gründe, Bootloadermodus oder weitere markante Speicherinhalte). Es können auch Daten zur Temperatur, Vibration, Strahlung, Laufzeitfehlercodes, Zustände, Kommunikationsparameter erfasst werden. Der Zustand kann umfassen den laufenden Prozessdatenaustausch, Konfigurationsmodus, Hochlaufphase, Datenraten im Netzwerk. Bei der Betriebsspannung können insbesondere Ladezustand des Akku oder der Batterie erfasst werden.

Die Aufgabe wir auch gelöst durch ein Verfahren zum Auslesen von Geräteparametern eines erfindungsgemäßen Feldgerätes, wobei zur Laufzeit des Feldgeräts Daten in dem Speicherbaustein gespeichert wurden und das Feldgerät dann einen Defekt aufweist, bei dem das Feldgerät nicht über kabelgebundene Wege kommunizieren kann und der Microcontroller bzw. die Verarbeitungseinheit des Feldgeräts nicht mehr angesprechbar ist und das Feldgerät an keiner Spannungsversorgung angeschlossen ist, weiter umfassend den Schritt: - Auslesen der Daten aus dem Speicherbaustein über die drahtlose Schnittstelle.

Weiterhin bevorzugt ist ein Verfahren vorgesehen, weiter umfassend den Schritt:
- das Auslesen der Daten aus dem Speicherbaustein über die drahtlose Schnittstelle erfolgt mittels RFID oder NFC.

Weiterhin bevorzugt ist ein Verfahren vorgesehen, weiter umfassend den Schritt:
- Anzeigen der ausgelesenen Daten auf einem mobilen Endgerät. Als mobiles Endgerät kann ein tragbarer Computer, ein Smartphone oder ein Lesegerät eingesetzt werden.

Weiterhin bevorzugt ist ein Verfahren vorgesehen, weiter umfassend den Schritt: Interpretation der ausgelesenen Daten anhand einer vorgegebenen Auswertungszuordnung.

Bevorzugt ist diese Auswertungszuordnung in einer Datenbank strukturiert. Die Datenbank ist bevorzugt standortunabhängig aufrufbar, insbesondere über das Internet bzw. über einen Webzugriff. Bevorzugt ist die Datenbank eingerichtet, um zentral um produktbezogene Fehlercodes oder Zustandcodes ergänzt zu werden. Die Datenbank ist bevorzugt so eingerichtet, dass über Identifikationsmerkmale des Produktes (Produktname, ID, Chargencode) entsprechende Fehlercodes oder Zustandcodes textuell (menschlich les- und interpretierbar) ausgebbar sind.

Weitere Einzelheiten und Vorteile der Erfindung sollen nun anhand eines in der Zeichnung dargestellten Ausführungsbeispiels näher erläutert werden.

Es zeigt:

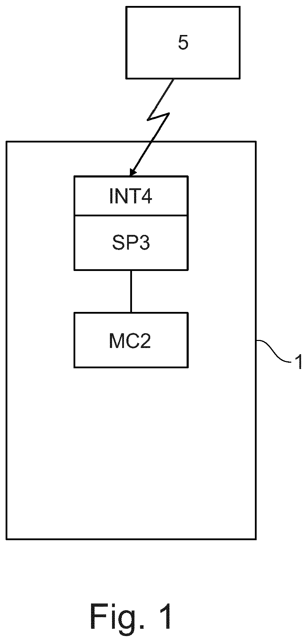

- Fig. 1: eine schematische Darstellung eines Feldgeräts mit einer Microcontroller basierten Schaltung.

Fig 1 zeigt eine schematische Darstellung eines Feldgeräts (1) mit einer Microcontroller basierten Schaltung, umfassend einen Microcontroller (MC2) und eine hiermit verbundenen Speicherbaustein (SP3). Es ist außerdem eine drahtlose Schnittstelle (INT4) vorgesehen.

Im Betrieb werden Daten durch den Microcontroller (MC2) auf den Speicherbaustein (SP3) geschrieben.

Über die drahtlose Schnittstelle (INT4) werden die Daten an ein mobiles Endgerät (5) übertragen.

Bevorzugt handelt es sich bei dem Speicherbaustein (SP3) und der drahtlosen Schnittstelle um einen RFID-Tag. Dieser RFID-Tag ist mit dem Mictrocontroller (MC2) verbunden und ist eingerichtet, die Daten, die vom Microcontroller (MC2) zur Verfügung gestellt werden, zu speichern. Es kann sich hierbei um Daten wie Zustände handeln, beispielsweise, dass gerade ein Update lädt und installiert wird, oder Umweltparameter wie Temperatur, Vibration oder Feuchtigkeit.

Fällt das Feldgerät (1) nun aus und ist der Microcontroller (MC2) nicht mehr ansprechbar, kann mit einem mobilen Endgerät (5), beispielsweise einem Laptop oder einem Smartphone über die Schnittstelle (INT4) der Inhalt des Speicherbausteins (SP3), d.h. des RFID-Tags ausgelesen werden. Die dort gewonnen Daten können dann auf dem mobilen Endgerät (5) angezeigt werden und durch Interpretation der ausgelesenen Daten anhand einer vorgegebenen Auswertungszuordnung visualisiert werden. So können die Daten ausgewertet werden und dem Bediener des mobilen Endgeräts (5) auf einem Display angezeigt werden, dass ein Update installiert wurde und dabei eine erhöhte Vibration aufgetreten war und kurz danach die Betriebsspannung abgefallen ist.

Mit dem erfindungsgemäßen Feldgerät und dem Verfahren zum Auslesen von Parametern aus diesem Feldgerät ist eine Möglcihkeit geschaffen, auch nach einer Havarie festzustellen, welche Umstände zum Versagen des Gerätes geführt haben, indem diese Daten "post mortem" über die drahtlose Schnittstelle auslesbar ist, ohne dass es einer aufwendigen Analyse und mechanischen Herauslösung von beispielsweise vergossenen Teilen bedarf. Es können damit auch Ersatzgeräte parametrisiert werden und die Aufgabe des havarierten Geräts zeitnah übernehmen.

### Bezugszeichenliste

- 1: Feldgerät
- 2: Mikrocontroller MC2
- 3: Speicherbaustein SP3
- 4: Drahtlose Schnittstelle INT4
- 5: Datenmobiles Endgerät

## Patentansprüche

1. Feldgerät (1) mit einer Microcontroller-basierten elektronischen Schaltung, umfassend
ein mit dem Microcontroller (MC2) verbundenen Speicherbausstein (SP3), der eingerichtet ist, um während des Betriebs des Feldgeräts (1) Daten zu speichern,
**dadurch gekennzeichnet, dass**
eine drahtlose Schnittstelle (INT4) vorgesehen ist, über die die Daten aus dem Speicherbaustein (SP3) auslesbar sind.

2. Feldgerät (1) nach Anspruch 1, wobei der gesonderte Speicherbaustein (SP3) eingerichtet ist, um als passiver RFID-Tag ansprechbar zu sein.

3. Feldgerät (1) nach einem der vorhergehenden Ansprüche, wobei der Speicherbaustein (SP3) einen Transponder, vorzugsweise gem. dem NFC- und/oder dem RFID-Standard, aufweist.

4. Feldgerät (1) nach einem der vorhergehenden Ansprüche, wobei der Speicherbaustein (SP3) und/ oder der Microcontroller (MC2) technisch nicht zugänglich eingebaut sind/ ist.

5. Feldgerät (1) nach einem der vorhergehenden Ansprüche, wobei die Daten Stationsparameter des Gerätes oder weitere Betriebsparameter umfassen.

6. Verfahren zum Auslesen von Geräteparametern eines Feldgerätes (1) nach einem der vorhergehenden Ansprüche, wobei
zur Laufzeit des Feldgeräts (1) Daten in dem Speicherbaustein (SP1) gespeichert wurden
das Feldgerät dann einen Defekt aufweist, bei dem das Feldgerät (1) nicht über kabelgebundene Wege kommunizieren kannn und
der Microcontroller (MC1) des Feldgeräts (1) nicht mehr angesprechbar ist und das Feldgerät an keiner Spannungsversorgung angeschlossen ist, weiter umfassend den Schritt:
- Auslesen der Daten aus dem Speicherbaustein (SP3) über die drahtlose Schnittstelle (INT4).

7. Verfahren nach dem vorhergehenden Verfahrensanspruch, weiter umfassend den Schritt:
- das Auslesen der Daten aus dem Speicherbaustein (SP3) über die drahtlose Schnittstelle (INT4) erfolgt mittels RFID oder NFC.

8. Verfahren nach einem der vorhergehenden Verfahrensansprüchen, weiter umfassend den Schritt:
- Anzeigen der ausgelesenen Daten auf einem mobilen Endgerät (5).

9. Verfahren nach einem der vorhergehenden Verfahrensansprüchen, weiter umfassend den Schritt:
Interpretation der ausgelesenen Daten anhand einer vorgegebenen Auswertungszuordnung.
